# EUROPÄISCHE PATENTSCHRIFT

(11) **EP 1 081 544 B1**
(45) Veröffentlichungstag und Bekanntmachung des Hinweises auf die Patenterteilung: **19.03.2003**
(21) Anmeldenummer: 00113646.4
(22) Anmeldetag: 28.06.2000
(51) Int. Cl.: G03B 27/72, G02B 27/10, G02B 26/08

(54) **Vorrichtung und Verfahren zum Belichten eines digitalen Bildes auf lichtempfindliches Material**
Apparatus for and method of projecting a digital image onto lightsensitive material
Dispositif et procédé pour projeter une image digitale sur un matériau photosensible

(30) Priorität: 07.08.1999 DE 19937417
(43) Veröffentlichungstag der Anmeldung: 07.03.2001
(73) Patentinhaber: Agfa-Gevaert AG, 51373 Leverkusen (DE)
(72) Erfinder: Haider, Peter, 81547 München (DE)

(56) Entgegenhaltungen:
- EP-A- 0 922 986
- EP-A- 1 031 874
- US-A- 5 105 299
- US-A- 5 164 854
- US-A- 5 704 701
- US-A- 5 796 526

## Beschreibung

Die Erfindung betrifft eine Vorrichtung sowie ein Verfahren zum Belichten eines digitalen Bildes auf lichtempfindliches Material nach dem Oberbegriff von Anspruch 1 und Anspruch 10. Derartige Vorrichtungen und Verfahren sind aus verschiedenen Anmeldungen, die sich mit digitalen Belichtungseinrichtungen befassen, bekannt.

Ein Beispiel ist in der DE-PS 42 11 128 offenbart, in der ein Bildübertragungsverfahren beschrieben wird. Bei diesem Verfahren wird eine Bildvorlage punkt- und zeilenweise abgetastet, die einzelnen Signale werden digitalisiert und die digitalen Bildsignale mittels eines von einer Lichtquelle beleuchteten Lichtmodulators über eine Optik auf Fotopapier aufbelichtet.

Ein weiteres Beispiel ist in der US 5,704,701 beschrieben. Hier wird ein digitales Bild in drei farbige Teilbilder aufgespalten. Diese Teilbilder werden an verschiedenfarbigen DMDs dargestellt, welche von einer Lichtquelle über Strahlteiler beleuchtet werden. Das von den DMDs modulierte, reflektierte Licht wird wiederum durch die Strahlteiler gelenkt, wobei es zu einem Gesamtbild vereinigt wird. Das Gesamtbild besteht aus einer Überlagerung der drei farbigen Einzelbilder.

Insbesondere ist auch bekannt, bei derartigen digitalen Belichtungseinrichtungen die digitalen Bilder in gleichfarbige Teilbilder aufzuspalten. Jedes Teilbild wird dann auf'einem Lichtmodulator dargestellt. Mittels einer Optik werden die Teilbilder auf dem lichtempfindlichen Material nebeneinander abgebildet, so daß sich auf dem Material wieder das Gesamtbild ergibt. Da hierbei die Auflösung des Lichtmodulators immer nur für einen Teil des Bildes ausreichen muß, können auf diese Weise auch größere Bilder in ausreichender Auflösung aufbelichtet werden, ohne daß teure, extrem hochauflösende Bilderzeugungseinrichtungen verwendet werden müssen. Bei diesem Vorgehen ist es jedoch immer problematisch, die Stellen, an denen die Teilbilder aneinanderstoßen, so abzubilden, daß kein Dichtesprung im Abbild entsteht.

Ein Beispiel für ein derartiges Belichtungsverfahren ist in der US 5,801,814 beschrieben. Hier wird das digitale Originalbild in eine Vielzahl von Teilbildern aufgeteilt. Die Teilbilder werden nacheinander auf einem LCD erzeugt und nebeneinander durch ein Projektionslinsensystem auf das lichtempfindliche Material aufbelichtet. Das Nebeneinander-Setzen der sich zu einem Gesamtbild zusammenfügenden Teilbilder des LCD-Bildes auf dem lichtempfindlichen Material wird dadurch realisiert, daß zwischen der Aufbelichtung der Teilbilder entweder das LCD, das Objektiv, ein in den Strahlengang eingebrachter Strahlteiler oder das lichtempfindliche Material bewegt wird. Um Dichtesprünge in den Stoßbereichen der nebeneinander liegenden Teilbilder zu vermeiden, werden die Teilbilder um einige Pixel überlappend aufbelichtet. Die Dichte der Pixel jedes Teilbildes wird dann im Überlappbereich umgekehrt proportional zur Anzahl der überlappenden Teilbilder reduziert. Zum exakten Nachkalibrieren unterschiedlicher, von einzelnen Pixeln übertragener Dichten werden vor der Belichtung der Bilder Sensoren in den Strahlengang der Überlappbereiche des LCD eingefahren, so daß die mehrfach belichteten Pixel ausgemessen und korrigiert werden können.

Dieses Verfahren ist für Belichtungsverfahren geeignet, bei denen es nicht auf die schnelle Produktion vieler Bilder ankommt. Es bietet sich z. B. für das Herstellen von wenig häufigen Indexprints zwischen den Standardbelichtungen an. Der Zeitverlust der durch das Nacheinander-Belichten der Teilbilder und auch das zwischen Belichtungen notwendige Kalibrieren entsteht, kann hierbei in Kauf genommen werden. Die Belichtung eines gesamten digitalen Bildes dauert bei diesem Verfahren allerdings zu lange, um es bei einem fotografischen Kopiergerät einzusetzen, bei dem fortlaufend Bilder aufbelichtet werden sollen.

Ein anderes System, das sich insbesondere für einen Zeilenbelichter zum Nebeneinander-Aufbelichten von zwei Teilbildern eignet, wird in der US 5,105,299 beschrieben. Hier werden zwei untereinander liegende Zeilen eines DMDs (Digital Micromirror Device) von einer Lampe beleuchtet, und das Licht wird von den Spiegelchen des DMDs entsprechend der Bilddaten so moduliert, daß auf jeder DMD-Zeile eine Hälfte einer Bildzeile entsteht. Das modulierte und reflektierte Licht der beiden Bildzeilenhälften wird mittels einer aus verspiegelten Prismenflächen bestehenden Optikanordnung so umgelenkt, daß im Objekt untereinander liegende Zeilen, die jeweils eine Bildhälfte einer Zeile repräsentieren, im Bild nebeneinander dargestellt werden. Auf dem zu belichtenden Material ergibt sich dann eine durchgehende Zeile.

Ebenso wie bei allen anderen digitalen Belichtungseinrichtungen, bei denen Teilbilder auf dem Papier zu einem Gesamtbild zusammengesetzt werden, ergibt sich natürlich auch bei diesem Verfahren das Problem eines Dichtesprungs an den Stoßkanten der Teilbilder. Auf diese Problematik wird in der Patentschrift jedoch nicht eingegangen.

Ein spezielles Problem dieser Anordnung ergibt sich daraus, daß Beleuchtungs- und Abbildungsstrahlengang räumlich ausreichend weit voneinander getrennt sein müssen, damit nicht der Abbildungsstrahlengang von der Beleuchtungsoptik vignettiert wird. Diese räumliche Trennung verhindert einen kompakten Aufbau des Belichtungssystems.

Dieselbe Problematik besteht bei der nicht vorveröffentlichten Patentanmeldung EP 1 031 874. Hier wird vorgeschlagen, das von zwei DMDs reflektierte Licht mittels eines Strahlteilers zusammenzusetzen. Die DMDs sind beidseitig des Strahlteilers so angeordnet, daß das Licht eines DMDs durch eine Hälfte des Strahlteilers tritt. Das Licht des anderen DMDs wird von der zweiten Hälfte so reflektiert, daß die von den DMDs erzeugten Bilder nebeneinander auf lichtempfindliches Material abgebildet werden. Zur Beleuchtung ist pro DMD eine Lichtquelle vorgesehen, die an den Strahlteilem und am abbildenden Objektiv vorbei die DMDs beleuchtet. Um den Stoßbereich der nebeneinander abgebildeten Teilbilder zu korrigieren, wird in dieser Anmeldung vorgeschlagen, die zusammengesetzten Teilbilder mittels eines Strahlteilers teilweise aus dem Abbildungsstrahlengang auszukoppeln. Das ausgekoppelte Licht wird auf einen Sensor geleitet, und dort wird überwacht, ob die Belichtung im Stoßbereich gleichmäßig erfolgt. Damit kann auch während der Belichtung eine fortlaufende Korrektur der Dichte im Stoßbereich erfolgen. Nachteilig ist bei dieser Anordnung jedoch ebenso wie bei der vorhergehenden, daß ein sehr kompakter Aufbau unmöglich ist, da Beleuchtungs- und Abbildungsstrahlengang räumlich getrennt sein müssen. Ferner ist es bei derartigen Anordnungen problematisch, die zwei Lichtmodulatoren so zu justieren, daß ihre Bilder auf dem Fotopapier exakt aneinanderstoßen.

Aufgabe der Erfindung war es deshalb, eine Vorrichtung zum Belichten digitaler Bilder, bei der an verschiedenen Lichtmodulatoren erzeugte Teilbilder gleichzeitig nebeneinander auf lichtempfindliches Material abgebildet werden, so auszubilden, daß bei einem möglichst kompakten, justagefreundlichen Aufbau der Vorrichtung keine Dichtesprünge an den Stoßbereichen der Teilbilder auftreten.

Gelöst wird diese Aufgabe gemäß der Erfindung durch eine Vorrichtung mit den Merkmalen von Anspruch 1 und ein Verfahren mit den Merkmalen von Anspruch 10. Vorteilhafte Ausführungsformen der Erfindung sind Gegenstand der Unteransprüche.

Durch das erfindungsgemäße Anordnen von Strahlteilern oder Strahlteilerprismen zwischen Beleuchtungseinheit, Lichtmodulatoren und Abbildungsobjektiv kann ein sehr kompakter Aufbau der Belichtungsvorrichtung realisiert werden, denn sowohl Beleuchtungs- als auch Abbildungsstrahlengang können durch die Strahlteiler oder -prismen geführt werden. Durch diese Strahlführung ist es möglich, die reflektierenden Lichtmodulatoren direkt auf dem die Teilbilder kombinierenden Komplex anzubringen. Das ermöglicht einerseits den äußerst kompakten Aufbau der Belichtungsvorrichtung, andererseits wird es durch das Anbringen der Lichtmodulatoren auf dem Komplex vergleichsweise einfach, die Lichtmodulatoren zu justieren. Hierzu können sie beispielsweise mit einem Glaskleber beweglich auf den Komplex aufgesetzt und dort solange verschoben werden bis sich bei der Abbildung eines Testbildes auf dem lichtempfindlichen Material ein lückenloses Gesamtbild ergibt. Anschließend wird der Glaskleber gehärtet. Einmal justiert, bleiben die Lichtmodulatoren fest auf dem Komplex und auch das Austauschen von Teilen der Belichtungsvorrichtung, wie beispielsweise der Beleuchtungseinheit oder des Objektives, würde keine neue Justage notwendig machen.

Bei der Verwendung von Prismenkomplexen sind diese so aufgebaut und angeordnet, daß die von der Beleuchtungseinrichtung ausgesandten Strahlen unter einem so kleinen Winkel auf die Prismengrenzflächen treffen, daß sie beim Übergang zum optisch dünneren Medium an der jeweiligen Grenzfläche auf den Lichtmodulator totalreflektiert werden. Die vom Lichtmodulator reflektierten Strahlen treffen unter einem anderen Winkel auf die Grenzfläche der Strahlteilerprismen auf als die einfallenden Strahlen, so daß sie die Grenzflächen passieren können. Bei der Transmission werden die Strahlen so abgelenkt, daß sie zusammen mit den von anderen Lichtmodulatoren reflektierten Strahlen hinter den Strahlteilerprismen ein gemeinsames Strahlenbündel ergeben, das auf dem lichtempfindlichen Material ein lückenloses Bild belichtet.

Als Lichtmodulatoren können DMDs (Digital Micro Mirror Devices), VFDs (Vakuum Fluoreszenz Displays), reflexive LCDs, GLVs (Grating Light Valve) oder jeder andere reflexive Lichtmodulator verwendet werden.

Je nach Aufbau und Anordnung von Strahlteilerkomplex und Beleuchtungsanordnung können Teilbilder einer beliebigen Zahl von Lichtmodulatoren zusammengesetzt werden. Obwohl dabei eine gerade Anzahl von Lichtmodulatoren aus Symmetriegründen einfacher realisierbar ist, sind grundsätzlich auch ungerade Zahlen von Lichtmodulatoren kombinierbar.

Für das Aufspalten der Strahlen sind sowohl physikalische als auch geometrische Strahlteiler vorstellbar. Metallische physikalische Strahlteiler haben den Vorteil, daß sie das aufgespaltene Licht farblich kaum verändern, so daß das zusammengesetzte Bild nicht in der Farbe korrigiert werden muß, sie haben jedoch den Nachteil eines großen Lichtverlusts.

Als Beleuchtungseinheit eignen sich alle möglichen mehrfarbigen Lichtquellen, wie z. B. Halogenlampen oder LEDs, deren Licht mit Strahlteilem in einem gemeinsamen Strahlengang vereinigt wird. Wichtig für die Beleuchtung ist nur, daß das Licht für alle Lichtmodulatoren möglichst von derselben Lichtquelle kommt. Abhängig vom Aufbau der Strahlteilerkomplexe kann das Licht der Beleuchtungseinheit direkt auf die Lichtmodulatoren gelenkt werden oder das Licht der Beleuchtungseinheit wird durch zusätzliche Strahlteiler erst einmal so aufgeteilt, daß sich mehrere virtuelle Bilder dieser einen Lichtquelle ergeben, die dann jeweils einen Lichtmodulator beleuchten. Der Vorteil nur einer Beleuchtungseinheit zum Beleuchten mehrerer Lichtmodulatoren liegt darin, daß Veränderungen der Beleuchtungseinheit sich auf alle von den Lichtmodulatoren erzeugten Teilbilder gleich auswirken, so daß im Gesamtbild keine Dichtesprünge aufgrund unterschiedlicher Schwankungen an den Stoßkanten der Teilbilder zu erkennen sind.

Die Anordnung von Beleuchtungseinheit, Beleuchtungsoptik, Strahlteilerkomplex, Lichtmodulatoren sowie Abbildungsoptik sollte symmetrisch so erfolgen, daß sowohl die Strahlengänge, die die Lichtmodulatoren beleuchten, als auch die Strahlengänge, die das auf den Lichtmodulatoren erzeugte Bild auf das lichtempfindliche Material abbilden, für jeden Lichtmodulator gleich lang sind. Das ist die Voraussetzung dafür, daß ein Köhler'scher Strahlengang realisiert werden kann. Bei diesem muß die Beleuchtungsoptik so angeordnet und aufgebaut sein, daß das Bild der Lichtquelle in die Pupille der Abbildungsoptik abgebildet wird, und die Abbildungsoptik muß so gestaltet sein, daß die Pupille der Beleuchtungsoptik gleichzeitig die Luke der Abbildungsoptik wird. Durch diesen Strahlengang wird gewährleistet, daß keine Ortsinformation der Lampe in das Bild übertragen wird. Durch das Auslöschen jeglicher Ortsinformation und das Verwenden nur einer Lichtquelle wird verhindert, daß zeitliche Veränderungen, die lokal an einer Stelle in der Lampe entstehen, am Rand eines Teilbildes zu sehen sind, am Rand des anstoßenden aber nicht, was Dichtesprünge im Stoßbereich zur Folge hätte.

Anstelle der Realisierung des Köhler'schen Strahlengangs kann der Strahlengang zur Verhinderung von Dichtesprüngen auch so aufgebaut werden, daß das den Stoßbereich der Teilbilder abbildende Licht von derselben Stelle der Beleuchtungseinheit kommt.

Weitere Einzelheiten und Vorteile der Erfindung ergeben sich aus den Unteransprüchen im Zusammenhang mit der Beschreibung von Ausführungsbeispielen, die anhand der Zeichnungen eingehend erläutert werden.

Es zeigen:
- Fig. 1: den schematischen Aufbau einer erfindungsgemäßen digitalen Belichtungsvorrichtung, bei der Abbildungs- und Beleuchtungsstrahlengang durch einen Strahlteiler-Prismenkomplex geführt werden,
- Fig. 2: schematisch einen Strahlteiler-Komplex mit geometrischen Strahlteilern, der so aufgebaut ist, daß mehr als zwei Lichtmodulatorenbilder zusammengefügt werden und
- Fig. 3: schematisch einen Strahlteilerkomplex mit physikalischen Strahlteilern, der so aufgebaut ist, daß mehr als zwei Lichtmodulatorenbilder zusam-' mengefügt werden.

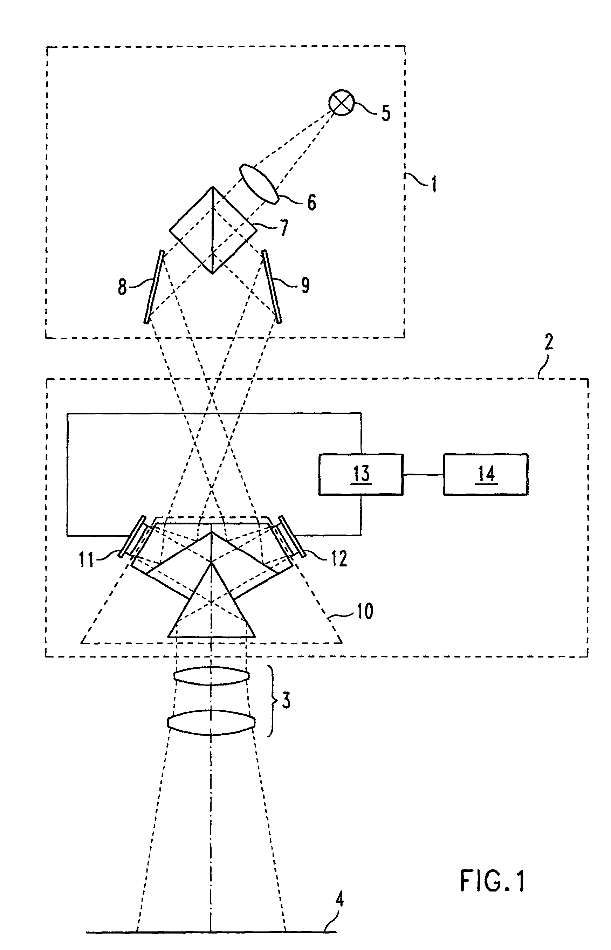

Fig. 1 zeigt eine Beleuchtungseinheit 1, deren Licht auf eine Bildgeneriereinheit 2 geleitet wird, in der das Licht moduliert wird, so daß ein Bild entsteht, das durch die Abbildungsoptik 3 auf Fotopapier 4 aufbelichtet wird. Die Beleuchtungseinheit weist eine Lichtquelle 5 auf, die mehrfarbiges Licht aussendet. Als Lichtquelle eignet sich hier beispielsweise eine Halogenlampe oder rote, grüne und blaue LEDs, deren Licht über dichroitische Spiegel in einem Strahlengang vereinigt wird. Das Licht der Lichtquelle wird über eine Beleuchtungsoptik 6 auf einen Strahlteiler 7 gelenkt, von dem das Licht in zwei symmetrische Strahlengänge aufgespalten wird, so daß sich zwei getrennte Lichtwege über die Spiegel 8 und 9 ergeben. Das von den Spiegeln reflektierte Licht wird von einem Strahlteiler-Prismenkomplex 10 umgelenkt und auf reflexive Lichtmodulatoren 11 und 12 geleitet. Als reflexive Lichtmodulatoren werden im Ausführungsbeispiel DMDs verwendet. Prinzipiell ist bei diesem Aufbau jedoch jeder beliebige reflexive Lichtmodulator einsetzbar. Die Lichtmodulatoren werden von einer Steuereinheit 13 - entsprechend den von einer Recheneinheit 14 ermittelten Bilddaten - angesteuert, so daß sie das einfallende Licht je nach Bilddaten pixelweise in den Abbildungsstrahlengang oder von diesem weg reflektieren. Das in den Abbildungsstrahlengang reflektierte, modulierte Licht wird von beiden DMDs in je einem Abbildungsstrahlengang erneut in den Prismenkomplex 10 eingeleitet, von dem es so umgelenkt wird, daß die beiden Abbildungsstrahlengänge zu einem Strahlengang vereinigt werden. Aus dem Prismenkomplex tritt ein Strahlengang, der über die Abbildungsoptik 3 das Fotopapier 4 belichtet, so daß sich auf diesem das Abbild des digitalen Bildes ergibt.

Das digitale Bild wird von der Recheneinheit 14 in zwei Teilbilder aufgeteilt, so daß von den DMDs jeweils nur ein Teil des Gesamtbildes erzeugt werden muß. Die von den DMDs erzeugten Teilbilder werden dann durch das Abbildungssystem auf dem Fotopapier wieder zu einem Gesamtbild zusammengefügt. Durch dieses Vorgehen ist es möglich, ein Bild mit höherer Auflösung zu erzeugen, als dies bei der Abbildung des gesamten Bildes mit nur einem DMD möglich wäre. Zu beachten ist hierbei jedoch, daß sich an der Stelle, an der die Teilbilder zusammentreffen, keine Dichtesprünge ergeben dürfen. Um dies zu vermeiden, muß die Vorrichtung so justiert und kalibriert werden, daß die Randpixel beider DMDs genau aneinanderstoßen und im Stoßbereich von beiden DMDs exakt die gleiche Lichtmenge übertragen wird. Ferner muß gewährleistet sein, daß Veränderungen der Lichtquelle sich auf die Pixel beider DMDs, die dem Stoßbereich entsprechen, gleich auswirken.

Diesen Anforderungen wird dadurch Rechnung getragen, daß durch den Strahlteiler in der Beleuchtungseinheit ein identisches virtuelles Bild der Lichtquelle erzeugt wird. Das von Lichtquelle und virtuellem Bild der Lichtquelle ausgesandte Licht beleuchtet jeweils ein DMD, so daß sich eventuelle Veränderungen der Lichtquelle auf beide DMDs identisch auswirken. Um sicherzustellen, daß nicht nur die Gesamtlichtmenge pro DMD gleich ist, sondern auch jedes DMD gleichmäßig beleuchtet wird, muß vorzugsweise jegliche Ortsinformation der Lampe ausgelöscht werden. Hierfür muß gewährleistet werden, daß von jedem Ort der Lampe Licht auf jedes Pixel des DMDs fällt. Diese Bedingung ist in der Pupille der Beleuchtungsoptik erfüllt. Sobald diese Pupille mit dem abzubildenden Objekt (hier die DMDs) zusammenfällt, ist die Voraussetzung für eine gleichmäßige Ausleuchtung des Objekts gegeben. Wenn die beiden Strahlengänge exakt gleich lang sind, kann der Strahlengang so aufgebaut werden, daß eine Köhler'sche Beleuchtungsanordnung realisiert wird. Eine Köhler'sche Beleuchtungsanordnung ist in Lehrbüchern der Optik (z. B. Gottfried Schröder, "Technische Optik", 7. Auflage, 1990, S. 152-153) beschrieben.

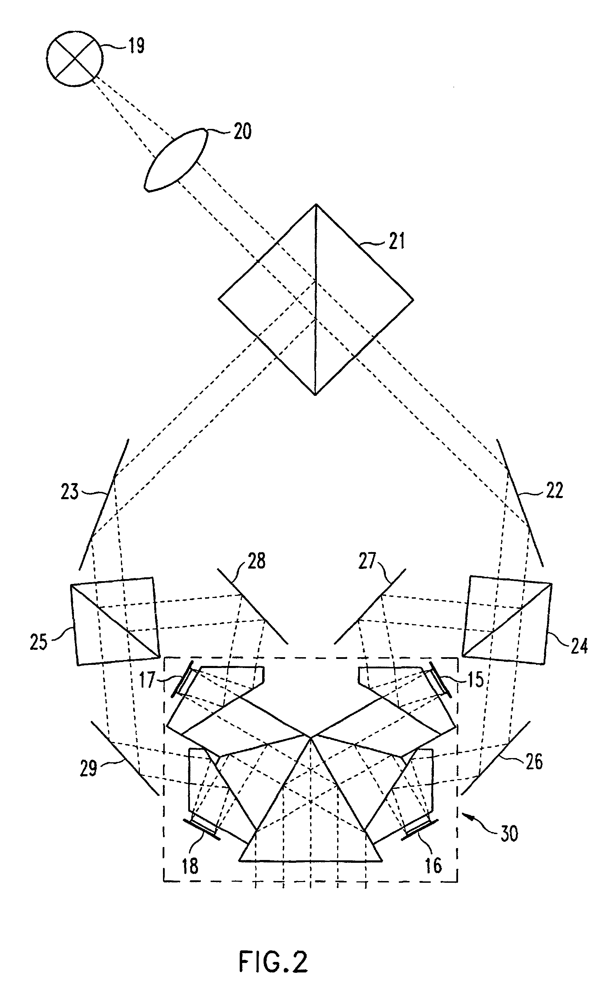

Mit einem derartigen Strahlteilerkomplex ist es natürlich gehauso gut möglich, mehr als zwei Teilbilder zu einem Gesamtbild zusammenzusetzen. Eine mögliche Ausführungsform für das Zusammensetzen von vier Teilbildern zu einem Gesamtbild ist in Fig. 2 dargestellt. Die abzubildenden Teilbilder werden an vier DMDs 15, 16, 17 und 18 erzeugt. Dazu werden die DMDs von einer Beleuchtungseinheit beleuchtet, die so aufgebaut ist, daß eine reale Lichtquelle über Zwischenbilder auf vier virtuelle Bilder abgebildet wird, wobei alle Lichtquellenbilder identisch sind.

Das Erzeugen der Teilbilder geschieht dadurch, daß Licht einer Lichtquelle 19 über ein Objektiv 20 auf einen ersten Strahlteiler 21 abgebildet wird. Dieser erzeugt ein virtuelles Bild der Lichtquelle. Das Licht von virtuellem Bild und Lichtquelle wird über zwei Umlenkspiegel 22 und 23 auf zwei weitere Strahlteiler 24 und 25 geleitet. Durch die Strahlteiler entstehen weitere virtuelle Bilder. Deren Strahlenbündel werden durch die Umlenkspiegel 26, 27, 28 und 29 auf den Strahlteilerkomplex 30 gelenkt, auf dem auch die DMDs angeordnet sind. Im Strahlteilerkomplex werden die Beleuchtungsstrahlen auf die DMDs reflektiert, an denen sie dann entsprechend der Bilddaten des jeweiligen Teilbildes moduliert werden. Das vom DMD modulierte und reflektierte Licht durchläuft erneut den Strahlteilerkomplex und wird von diesem derart umgelenkt, daß das von den vier DMDs reflektierte Licht zu einem Gesamtstrahl vereinigt wird, in dem die Teilstrahlen der vier Teilbilder ohne eine Überlappung oder einen Zwischenraum nebeneinander liegen. Auch in dieser Anordnung ist gewährleistet, daß daß alle vier Beleuchtungsstrahlengänge exakt gleich lang sind, so daß der Köhler'sche Strahlengang realisiert werden kann.

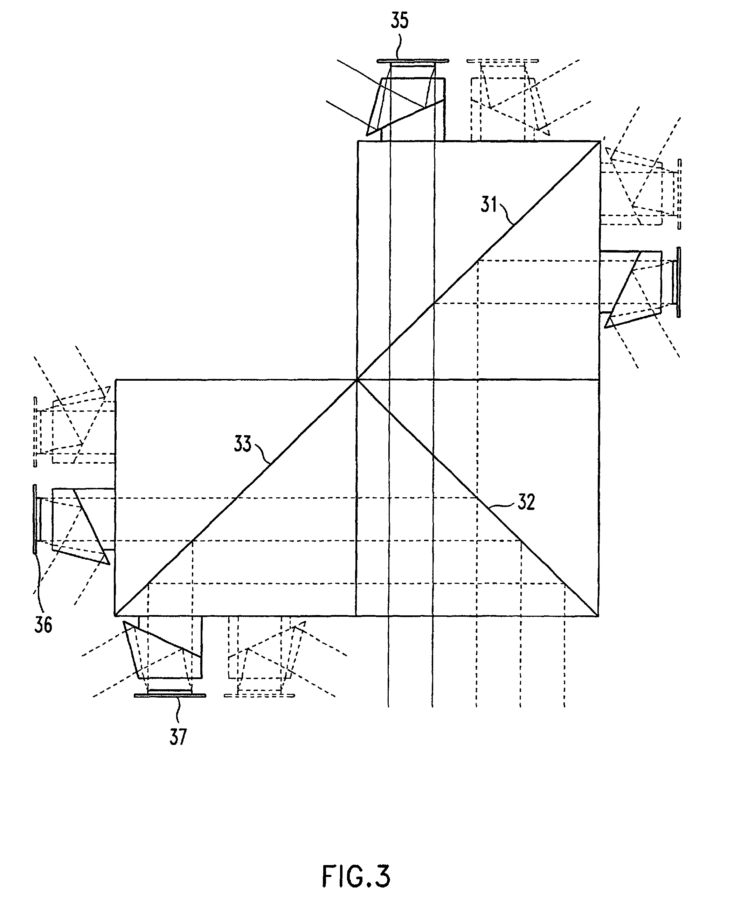

Anstelle dieses geometrischen Strahlteilerkomplexes kann ebenso gut ein Komplex aus physikalischen Strahlteilern verwendet werden. Ein möglicher Komplex aus physikalischen Strahlteilern, der die Aufgabe der Erfindung löst, ist in Fig. 3 dargestellt. An teildurchlässigen Flächen 31, 32 und 33 werden die von den DMDs 34, 35, 36 und 37 erzeugten Teilbilder zu einem Gesamtbild zusammehgesetzt. Auf dem Fotopapier entsteht dann ein Gesamtbild, das aus vier nebeneinander liegenden Teilbildern aufgebaut ist. Dadurch kann die ursprüngliche Auflösung, die sich bei Verwendung nur eines DMDs ergäbe, in einer Richtung vervierfacht werden.

Um die Auflösung auch in der anderen Dimension zu erhöhen, wäre vorstellbar, weitere DMDs - in der Abbildung gestrichelt angedeutet - am Strahlteilerkomplex anzubringen. Diese sind ober- bzw. unterhalb der Zeichenebene angeordnet, so daß ihre Bilder auf dem Fotopapier neben den in einer Linie angeordneten vier Bildern der DMDs 34, 35, 36, 37 zu liegen kommen.

Prinzipiell ist dieses System beliebig erweiterbar, indem immer weitere DMDs in einer zusätzlichen Ebene angeordnet werden.

Auch in der Zeichenebene kann die Anzahl von abzubildenden DMDs erhöht werden. Hierzu müssen die DMDs an einer Seite eines Strahlteilers mit Abstand zueinander gesetzt werden, wobei der Abstand ein Vielfaches einer DMD-Länge beträgt. Dabei entstehen Lücken im Bild, die durch Bilder von DMDs anderer Strahlteilerseiten ausgefüllt werden.

Eine ähnliche Erweiterung ist auch für die in Fig. 2 beschriebene Anordnung möglich.

## Patentansprüche

1. Vorrichtung zum Belichten eines digitalen Bildes auf lichtempfindliches Material mit einer Recheneinheit zum Aufspalten des digitalen Bildes in n digitale Teilbilder (n ≥ 2), wenigstens einer Steuereinheit zum Ansteuern von n pixelweise ansteuerbaren, reflexiven Lichtmodulatoren zum Erzeugen der n Teilbilder, einer Beleuchtungseinheit zum Beleuchten der Lichtmodulatoren und einem Objektiv zum Abbilden der Teilbilder auf das lichtempfindliche Material, **dadurch gekennzeichnet, daß** ein Prismen- oder ein Strahlteilerkomplex zum Kombinieren der Teilbilder zwischen Beleuchtungseinheit, Lichtmodulatoren und Abbildungsobjektiv so angeordnet und aufgebaut ist, daß sowohl Beleuchtungs- als auch Abbildungsstrahlengang hindurchtreten, wobei die Abbildung der n Teilbilder nebeneinander erfolgt.

2. Vorrichtung nach Anspruch 1, **dadurch gekennzeichnet, daß** die Lichtmodulatoren fest auf dem Prismen- oder Strahlteilerkomplex angebracht sind.

3. Vorrichtung nach Anspruch 2, **dadurch gekennzeichnet, daß** die Lichtmodulatoren DMDs sind.

4. Vorrichtung nach Anspruch 1, **dadurch gekennzeichnet, daß** Strahlteiler zum Aufspalten der Beleuchtungseinheit in n Bilder der Beleuchtungseinheit vorgesehen sind, die jeweils einen Lichtmodulator beleuchten.

5. Vorrichtung nach Anspruch 4, **dadurch gekennzeichnet, daß** die Beleuchtungseinheit LEDs aufweist.

6. Vorrichtung nach Anspruch 1, **dadurch gekennzeichnet, daß** zwei Lichtmodulatoren und die Prismen des Prismenkomplexes symmetrisch zur optischen Achse angeordnet sind.

7. Vorrichtung nach Anspruch 1, **dadurch gekennzeichnet, daß** drei Lichtmodulatoren und die Prismen des Prismenkomplexes symmetrisch zur optischen Achse angeordnet sind.

8. Vorrichtung nach Anspruch 1, **dadurch gekennzeichnet, daß** vier Lichtmodulatoren und Strahlteilerblöcke mit physikalischen Strahlteilern vorgesehen sind.

9. Vorrichtung nach Anspruch 1, **dadurch gekennzeichnet, daß** Beleuchtungseinheit, Lichtmodulatoren und Objektiv so angeordnet sind, daß der Köhler'sche Strahlengang realisiert ist.

10. Verfahren zum Belichten eines digitalen Bildes auf lichtempfindliches Material, bei dem das digitale Bild in n digitale Teilbilder (n ≥ 2) aufgespalten, von diesen auf n reflexiven, pixelweise ansteuerbaren, von einer Beleuchtungseinheit beleuchteten Lichtmodulatoren sichtbare Teilbilder erzeugt und die erzeugten Teilbilder durch ein Objektiv nebeneinander auf das lichtempfindliche Material abgebildet werden, **dadurch gekennzeichnet, daß** die erzeugten Teilbilder durch einen Prismen- oder einen Strahlteilerkomplex zusammengesetzt werden, durch den auch das Licht der Beleuchtungseinheit auf die Lichtmodulatoren gelenkt wird.

11. Verfahren nach Anspruch 10, **dadurch gekennzeichnet, daß** durch Strahlteiler mehrere Bilder der Beleuchtungseinheit erzeugt werden.

12. Verfahren nach Anspruch 10, **dadurch gekennzeichnet, daß** die Lichtmodulatoren fest auf dem Prismen- oder Strahlteilerkomplex angebracht werden.

## Claims

1. Device for exposing a digital image on light-sensitive material with an arithmetic unit for splitting the digital image into n digital part images (n ≥ 2), at least one control unit for controlling n reflective light modulators controllable pixel-by-pixel for producing the n part images, an illumination unit for illuminating the light modulators and a lens for projecting the part images on the light-sensitive material, **characterised in that** a prism or a beam splitter complex for combining the part images is arranged and set up between illuminating unit, light modulators and projection lens in such a way that both illumination and projection beam path pass through, the n part images being projected side by side.

2. Device according to claim 1, **characterised in that** the light modulators are securely arranged on the prism or beam splitter complex.

3. Device according to claim 2, **characterised in that** the light modulators are DMDs.

4. Device according to claim 1, **characterised in that** beam splitters for splitting the illumination unit into n images of the illumination unit are provided, each illuminating one light modulator.

5. Device according to claim 4, **characterised in that** the illumination unit comprises LEDs.

6. Device according to claim 1, **characterised in that** two light modulators and the prisms of the prism complex are arranged symmetrically to the optical axis.

7. Device according to claim 1, **characterised in that** three light modulators and the prisms of the prism complex are arranged symmetrically to the optical axis.

8. Device according to claim 1, **characterised in that** four modulators and beam splitter blocks with physical beam splitters are provided.

9. Device according to claim 1, **characterised in that** illumination unit, light modulators and lens are arranged in such a way that the Köhler beam path is produced.

10. Method for exposing a digital image on light-sensitive material in which the digital image is split into n digital part images (n ≥ 2), produces visible part images from these on n reflective light modulators illuminated by an illumination unit and controllable pixel-by-pixel and the part images produced are projected by a lens side by side onto the light-sensitive material, **characterised in that** the part images produced are combined by a prism or a beam splitter complex by which the light of the illumination unit is also directed onto the light modulators.

11. Method according to claim 10, **characterised in that** a plurality of images of the illumination unit are produced by beam splitters.

12. Method according to claim 10, **characterised in that** the light modulators are securely arranged on the prism or beam splitter complex.

## Revendications

1. Dispositif pour projeter une image numérique sur un matériau photosensible comprenant une unité de calcul pour diviser l'image numérique en n images numériques partielles (n ≥ 2), au moins une unité de commande pour commander n modulateurs de lumière réfléchissants pouvant être commandés par pixels pour la production des n images partielles, une unité d'éclairage pour éclairer les modulateurs de lumière et un objectif pour la formation des images partielles sur le matériau photosensible, **caractérisé en ce qu'un** ensemble de prismes ou un ensemble de séparateurs de rayons pour combiner les images partielles entre l'unité de projection, modulateurs de lumière et objectif formateur d'image est construit et disposé de manière à être traversés et par les rayons servant à la formation d'images et par les rayons servant à l'éclairage, ce par quoi se produit la formation côte à côte des n images partielles.

2. Dispositif selon la revendication 1, **caractérisé en ce que** les modulateurs de lumière sont fixés solidement sur l'ensemble de prismes ou de répartiteurs de rayons.

3. Dispositif selon la revendication 2, **caractérisé en ce que** les modulateurs de lumière sont des DMD.

4. Dispositif selon la revendication 1, **caractérisé en ce que** des séparateurs de rayons pour diviser l'unité d'éclairage en n images de l'unité d'éclairage sont prévus, lesquels éclairent chacun un modulateur de lumière.

5. Dispositif selon la revendication 4, **caractérisé en ce que** l'unité d'éclairage comporte des diodes électroluminescentes (LED).

6. Dispositif selon la revendication 1, **caractérisé en ce que** deux modulateurs de lumière et les prismes de l'ensemble de prismes sont disposés symétriquement par rapport à l'axe optique.

7. Dispositif selon la revendication 1, **caractérisé en ce que** trois modulateurs de lumière et les prismes de l'ensemble de prismes sont disposés symétriquement par rapport à l'axe optique.

8. Dispositif selon la revendication 1, **caractérisé en ce que** quatre modulateurs de lumière et blocs de séparateurs de rayons sont munis de séparateurs de rayons physiques.

9. Dispositif selon la revendication 1, **caractérisé en ce que** l'unité d'éclairage, les modulateurs de lumière et l'objectif sont disposés de telle sorte qu'une marche de rayons du type köhler est réalisée.

10. Procédé pour projeter une image numérique sur un matériau photosensible, dans lequel l'image numérique est divisée en n images partielles numériques (n ≥ 2), à partir desquelles des images partielles visibles sont produites par une unité d'éclairage sur n modulateurs de lumière éclairés réfléchissants, pouvant être commandés par pixels et les images partielles produites sont formées côte à côte sur le matériau photosensible par l'intermédiaire d'un objectif, **caractérisé en ce que** les images partielles produites sont assemblées à travers un ensemble de prismes ou de séparateurs de rayons, à travers lequel la lumière de l'unité d'éclairage est également dirigée sur les modulateurs de lumière.

11. Procédé selon la revendication 10, **caractérisé en ce qu'**à travers les séparateurs de rayons plusieurs images de l'unité d'éclairage sont produites.

12. Procédé selon la revendication 10, **caractérisé en ce que** les modulateurs de lumière sont montés rigidement sur l'ensemble de prismes ou de séparateurs de rayons.
